(19) **Europäisches Patentamt / European Patent Office / Office européen des brevets**

(11) **EP 4 640 915 A1**

(12) **EUROPEAN PATENT APPLICATION**
published in accordance with Art. 153(4) EPC

(43) Date of publication:
**29.10.2025 Bulletin 2025/44**

(21) Application number: **23907788.6**

(22) Date of filing: **21.12.2023**

(51) International Patent Classification (IPC):
**C23C 2/12** (2006.01)   **C23C 2/20** (2006.01)
**C23C 2/28** (2006.01)   **C22C 21/02** (2006.01)
**C22C 38/58** (2006.01)   **C22C 38/34** (2006.01)
**C22C 38/50** (2006.01)   **C22C 38/46** (2006.01)
**C22C 38/52** (2006.01)

(52) Cooperative Patent Classification (CPC):
**C22C 21/02; C22C 38/34; C22C 38/46;**
**C22C 38/50; C22C 38/52; C22C 38/58; C23C 2/12;**
**C23C 2/20; C23C 2/28**

(86) International application number:
**PCT/KR2023/021229**

(87) International publication number:
**WO 2024/136505 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022   KR 20220181031**
**15.12.2023   KR 20230182784**

(71) Applicant: **POSCO Co., Ltd
Pohang-si, Gyeongsangbuk-do 37859 (KR)**

(72) Inventors:
• **OH, Kkoch-Nim
Gwangyang-si, Jeollanam-do 57807 (KR)**
• **JUNG, Woo-Sung
Gwangyang-si, Jeollanam-do 57807 (KR)**

• **HWANG, Hyeon-Seok
Gwangyang-si, Jeollanam-do 57807 (KR)**
• **LEE, Kang-Min
Gwangyang-si, Jeollanam-do 57807 (KR)**
• **KIM, Sang-Heon
Gwangyang-si, Jeollanam-do 57807 (KR)**
• **PAIK, Doo-Jin
Gwangyang-si, Jeollanam-do 57807 (KR)**
• **OH, Ji-Eun
Gwangyang-si, Jeollanam-do 57807 (KR)**
• **CHO, Yong-Kyun
Seoul 06194 (KR)**

(74) Representative: **Meissner Bolte Partnerschaft
mbB
Patentanwälte Rechtsanwälte
Postfach 86 06 24
81633 München (DE)**

(54) **ALUMINUM-BASED PLATED STEEL SHEET AND METHOD FOR MANUFACTURING SAME**

(57)    The present invention pertains to an aluminum-plated steel sheet used in automobiles and the like, and a method for manufacturing same.

**EP 4 640 915 A1**

[Fig.3]

| | BEFORE ETCHING | AFTER ETCHING |
|---|---|---|
| (a) | | SIZE OF SPANGLE: IMPOSSIBLE TO IDENTIFY |
| (b) | | SIZE OF SPANGLE: 1.86 mm |
| (c) | | SIZE OF SPANGLE: 4.73 mm |

## Description

Technical Field

The present disclosure relates to an aluminum-plated steel sheet used in automobiles, etc. and a method for manufacturing the same.

Background Art

Recently, efforts have been made to improve fuel efficiency through weight reduction of automobiles. To this end, the thickness of steel may be reduced, but the reduction in thickness may cause problems in the stability of automobiles, so the strength of steel has to be improved. For this reason, demand for high-strength steel has continuously occurred, and various types of steels have been developed. However, since these steels have high strength, they have problems, such as poor workability, like springback.

To solve this problem, a hot press forming process has been proposed. The hot press forming process is also known as hot press forming, hot working, etc. The hot press forming process is a method of processing the steel at a high temperature (800°C or higher) that is good for processing then rapidly cooling the steel to a low temperature, while press forming in a mold, to form low-temperature structures, such as martensite, in the steel, thereby increasing the strength of a final product. In this case, the problem of processability may be minimized when manufacturing a high-strength component.

If such hot press forming is used, not only may complex shapes be easily formed, but the manufactured part (hot press-formed part) has the advantage of securing high strength, so its usability has been increased recently. In particular, by using plated steel using aluminum, zinc, etc. on the surface of the steel, corrosion resistance is also secured. For example, Patent Document 1 discloses the use of a steel sheet plated with aluminum in a hot press forming process.

When performing hot press forming using the aluminum-plated steel sheet, there is a problem that the corrosion resistance is weak due to sacrificial corrosion resistance of aluminum. Since customers require aluminum-plated steel sheets with high corrosion resistance, new plated steel sheets to which elements, such as Zn and Mg, are added during the aluminum plating have been developed.

However, since existing automobile parts companies use hot press forming, they have a hot press forming process optimized for existing aluminum-plated steel sheets. Therefore, there is a limit to applying the hot press forming process using the new plated steel sheet with the elements, such as Zn, Mg, added.

Therefore, it is necessary to utilize the existing aluminum-plated steel sheet. Since the aluminum-plated steel sheet usually includes a small amount of Si, the aluminum-plated steel sheet is also called an AlSi-plated steel sheet. Since the AlSi-plated steel sheet is an alloy plated steel sheet of Al and Si, the AlSi-plated steel sheet generally includes a structure by Al and a structure by Si. In particular, since Si is separately precipitated and solidified during cooling of the plated steel sheet, spangles, which are a surface characteristic of the AlSi-plated steel sheet, are formed.

The formation of spangles on the surface of the aluminum-plated steel sheet makes the surface not refined and adversely affects corrosion resistance.

(Patent Document 1) U.S. Patent No. 6,296,805

Summary of Invention

Technical Problem

An aspect of the present disclosure relates to an aluminum-plated steel sheet and provides an aluminum-plated steel sheet having excellent surface quality and corrosion resistance and a method for manufacturing the same.

The subject matter of the present disclosure is not limited to the above-described contents. Those skilled in the art to which the present disclosure pertains will have no difficulty in understanding the additional subject matter of the present disclosure from the general contents of the specification of the present disclosure.

Solution to Problem

According to an aspect of the present disclosure, an aluminum-based plated steel sheet comprises: a base steel sheet and an Al plating layer formed on the base steel sheet, wherein a size of spangles on a surface of the Al plating layer is 2.5 mm or less after surface etching.

After surface etching of the plated steel sheet, a fraction of Si phase observed in an optical image may be 40 area% or less.

A whiteness of the aluminum-based plated steel sheet may be 85% or more.

A glossiness of the aluminum-based plated steel sheet may be 60 GU or more.

The base steel sheet may comprise, in wt%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a remainder of Fe and impurities.

According to another aspect of the present disclosure, a method for manufacturing an aluminum-based plated steel sheet includes immersing a base steel sheet in an aluminum (Al) plating bath including silicon (Si) to attach a plating solution to a surface of the base steel sheet;

controlling a plating adhesion amount on the surface of the base steel sheet by an air knife (A/K); and

transferring the base steel sheet to which the plating solution is attached to a cooling unit to perform cooling, wherein a K value defined by Equation 1 below satisfies 200 to 400.

$$(Equation\ 1)\ K = 10^6 * (a*d)/(b*c*e)$$

where, a: plating bath Si content (wt.%), b: line speed (mpm), c: A/K gap (mm), d: A/K pressure (kPa), and e: A/K height (mm)

Advantageous Effects of Invention

The aluminum-based plated steel sheet, which is an example of the present disclosure, may provide an aluminum-based plated steel sheet having a refined surface and excellent corrosion resistance.

The various advantageous advantages and effects of the present disclosure are not limited to the above-described contents and may be more easily understood in the process of describing specific embodiments of the present disclosure.

Brief Description of Drawings

FIG. 1 is an image of a surface of a plated steel sheet of Comparative Example 8 before etching (a) and after etching (b).

FIG. 2 is a result of an electron probe X-ray micro analyzer (EPMA) analysis for Comparative Example 8.

FIG. 3 (a) to (c) are photographs of observing surfaces of Inventive Examples 1 and 3 and Comparative Example 8 before and after etching, respectively.

FIG. 4 (a) to (c) are optical images and image analysis results of Inventive Examples 1 and 3 and Comparative Example 8, respectively.

Best Mode for Invention

The terms used in this specification are intended to describe the present disclosure and are not intended to limit the present disclosure. In addition, the singular forms used in this specification include plural forms unless the relevant definition clearly indicates a meaning contrary thereto.

The meaning of "comprising" or "including" as used in the specification is to specify a component and does not exclude the presence or addition of other components.

Unless otherwise defined, all terms including technical and scientific terms used in this specification have the same meaning as that which would be generally understood by a person skilled in the art to which this invention pertains. Terms defined in the dictionary are to be interpreted so as to have a meaning consistent with the relevant technical document and the presently disclosed contents.

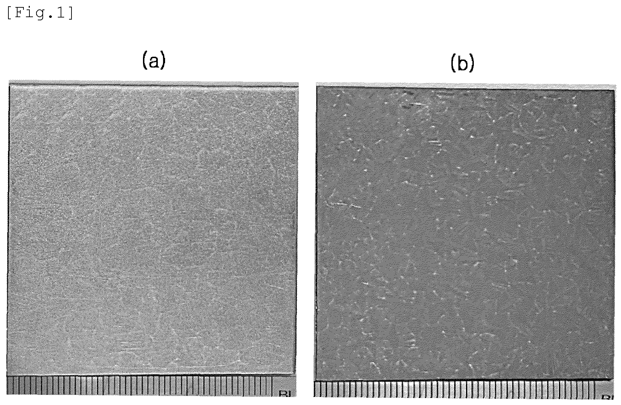

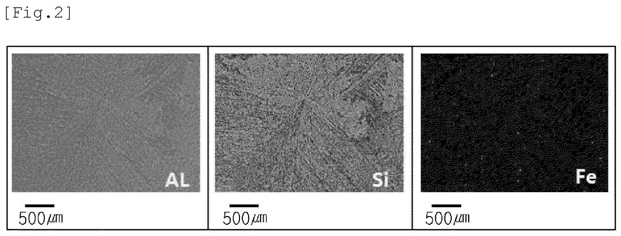

Spangles formed on a surface of an aluminum-based plated steel sheet, that is, an AlSi-plated steel sheet, are a phenomenon occurring when Si is separately precipitated during the cooling of the plated steel sheet. In other words, during the cooling process of the plated steel sheet, Si in a needle-like structure is formed on the surface of the plated steel sheet, and the spangle phenomenon occurs due to the Si in the needle-like structure (see FIGS. 1 and 2). Spangles impair the surface refinement of the plated steel sheet and negatively affect corrosion resistance due to galvanic corrosion that occurs between the spangles and adjacent aluminum and silicon.

Various methods have been utilized to control spangles, and thereamong, a method of adding other elements to a plating bath during plating has been widely used. However, since there are many difficulties in managing the plating bath, a technology capable of controlling spangle size without any change in special additional components in the plating bath is required.

Hereinafter, an aluminum-based plated steel sheet, which is an embodiment of the present disclosure, will be described in detail.

According to an embodiment of the present disclosure, an aluminum-based plated steel sheet includes a base steel sheet and an Al plating layer formed on the base steel sheet, and

A size of spangles on a surface of the Al plating layer may be 2.5 mm or less when visually checked after surface etching.

Since the Al plating layer of the aluminum-based plated steel sheet is an alloy of Al and Si, the Al plating layer may generally include a structure by Al and a structure by Si. Si may solidify separately in a precipitated form during cooling of the plated steel sheet, and a spangle phenomenon, which is a surface characteristic of the plated steel sheet, may appear. At this time, in a spangle region of the surface of the plated steel sheet, Si and Al are not mixed, but exist as agglomerates of the same type of particles, and galvanic corrosion may occur at the boundary in which Si and Al meet, which may adversely affect corrosion resistance. In addition, if the spangles are formed large and protrude from the surface, the spangles may adversely affect the surface refinement of the plated steel sheet. Therefore, preferably, the size of the spangles be 2.5 mm or less when visually checked after surface etching. Meanwhile, the shape of the spangle observed after etching is a rhombus shape with two triangles attached thereto, and the length of the major axis of the rhombus may be defined as the size of one spangle.

There is no particular limitation on the surface etching, but as a specific example, etching may be performed for 1 to 3 minutes in 4 g NaCl + 200 mL (40% $H_3PO_4$) at room temperature.

The plated steel sheet may have a whiteness of 85% or more and a glossiness of 60 GU or more. Since the plated steel sheet has the whiteness of 85% or more and the glossiness of 60 GU, a refined surface may be secured.

FIG. 1 is an image of a surface of a plated steel sheet of Comparative Example 8 before etching (a) and after etching (b), and FIG. 2 is a result of an electron probe X-ray micro analyzer (EPMA) analysis for Comparative Example 8. Hereinafter, an embodiment of the present disclosure will be further described with reference to FIGS. 1 and 2.

The spangle is a phenomenon that occurs when Si is separately precipitated during cooling of the plated steel sheet, and when the surface of the plated steel sheet is observed with an EPMA, it may be Si in a needle-like structure. FIGS. 1 and 2 are photographs of the surface of Comparative Example 8 among the following examples.

Meanwhile, a fraction of the Si phase in the optical image of the surface of the Al plating layer after the etching may be 40 area% or less. If the Si phase on the surface is too much, galvanic corrosion may occur between the Al phase and the Si phase on the surface, which may reduce the corrosion resistance.

The target of the base steel sheet is not particularly limited as long as it is a steel sheet that may be used for hot press forming. In addition to the classification according to the manufacturing process, such as hot-rolled steel sheet, cold-rolled steel sheet, etc., there are no special restrictions on the composition of steel types and alloys, such as dual phase (DP) steel, multi-phase steel, TRIP steel, and TWIP steel.

As a specific example, the 22MnB5 steel type is representative, and it may be a steel grade including, in wt%, carbon (C): 0.1 to 0.3%, manganese (Mn): 1.0 to 2.0%, silicon (Si): 0.02 to 0.30%, boron (B): 5 to 45 ppm in a specific content, and a remainder may include inevitable impurities and iron (Fe).

In addition, the base steel sheet may be a steel grade having a chemical composition of, in wt%, carbon (C): 0.02 to 0.6%, silicon (Si): 0.001 to 2%, aluminum (Al): 0.001 to 1%, manganese (Mn): 0.1 to 4%, phosphorus (P): 0.05% or less, sulfur (S): 0.02% or less, nitrogen (N): 0.02% or less, titanium (Ti): 0 to 0.1%, boron (B): 0.0001 to 0.01%, copper (Cu) : 0 to 1.00%, molybdenum (Mo) : 0 to 1.00%, chromium (Cr) : 0 to 1.00%, nickel (Ni): 0 to 1.00%, vanadium (V): 0 to 1.00%, calcium (Ca): 0 to 0.01%, niobium (Nb): 0 to 0.1%, tin (Sn): 0 to 1%, tungsten (W): 0 to 1%, antimony (Sb): 0 to 1%, magnesium (Mg): 0 to 0.1%, cobalt (Co): 0 to 1%, arsenic (As): 0 to 1%, zirconium (Zr): 0 to 1%, bismuth (Bi): 0 to 1%, rare earth metal (REM): 0 to 0.3%, and a remainder of Fe and impurities.

Next, an embodiment of a method for manufacturing an aluminum-plated steel sheet according to an example of the present disclosure will be described in detail.

The method for manufacturing an aluminum-plated steel sheet comprises immersing a base steel sheet in a plating bath to attach a plating solution to a surface of the base steel sheet; controlling a plating adhesion amount on the surface of the base steel sheet; and transferring the base steel sheet to which the plating solution is attached to a cooling unit. Hereinafter, each operation is described in detail.

First, the base steel sheet is immersed in a plating bath to attach the plating solution to the surface of the base steel sheet. Specifically, the base steel sheet is immersed in an aluminum (Al) plating bath including silicon (Si) to attach the plating solution to the surface of the base steel sheet.

It is effective that a plating bath dipping temperature of the base steel sheet is 620 to 680°C. Before immersing the base steel sheet in the plating bath, the base steel sheet may be heated to a certain temperature (a dipping temperature). At this time, the dipping temperature is effectively 620 to 680°C. By heating the base steel sheet to the dipping temperature, the molten aluminum may rapidly solidify on the surface of the steel sheet, thereby preventing problems, such as a deviation in the plating adhesion amount or non-plating due to decreased fluidity. However, excessive heating may actually promote melting of the steel sheet to accelerate the occurrence of dross.

The plating bath may comprise silicon (Si): 6 wt% or more and less than 11.5 wt%, iron (Fe): 1 to 4 wt%, and a remainder of aluminum (Al) and inevitable impurities. The plating bath may be an Al-based plating bath, and the Al-based plating bath is for forming an Al plating layer, and any plating that may be applied to a plated steel sheet for hot press forming may be applied to the present disclosure without limitation. As a preferred example, the plating bath composition may include silicon (Si): 6 wt% or more and less than 11.5 wt%, iron (Fe): 1 to 4 wt%, and a remainder of aluminum (Al) and inevitable impurities.

As the Si content in the plating bath increases, a melting point of the plating bath decreases, which is thought to be easier to cool the plating steel sheet so a plating steel sheet with a refined surface may be obtained as the Si content increases, but in reality, a plating steel sheet with a poor surface is rather obtained. This is because, when the Si content is 11.5 wt% or more, it corresponds to the vicinity of the Eutectic point in the binary phase of Al-Si, so a large amount of Si agglomerates and is solidified at once, and the spangle size becomes larger, and as a result, a plating steel sheet with a poor surface may be obtained.

It is effective that a temperature of the plating bath is 630 to 680°C. If the temperature of the plating bath is too low, the fluidity of the plating solution in the plating bath may decrease, while if the temperature is too high, the occurrence of dross in the plating bath may increase.

Next, the plating adhesion amount of the base steel sheet is controlled. The unit or method for controlling the plating adhesion amount is not particularly limited and a method commonly practiced in the art to which the present disclosure pertains may be performed. As an example, an air knife (A/K) is used.

The plating adhesion amount is 8 to 80 g/m$^2$ on one side, and the plating layer thickness is 3 to 30 $\mu$m. The plating adhesion amount of Al plating may be converted into a plating adhesion amount when the plating layer thickness is multiplied by 2.7, thus the plating layer thickness of 3 to 30 $\mu$m is converted into the plating adhesion amount, it is approximately 8 to 80 g/m$^2$. A more preferable thickness is 4 to 26 $\mu$m, and the plating adhesion amount is 10 to 70 g/m$^2$.

The base steel sheet with the plating adhesion amount controlled is transferred to a cooling unit and cooled. When the base steel sheet with the plating solution attached enters the cooling unit, rapid cooling may begin and the reaction of the alloy layer in the Al plating layer may stop. An example of the cooling unit is a cooling tower.

The manufacturing method is effective when the K value defined by the Equation 1 below is 200 to 400.

Equation 1 may be calculated as follows.

$$\text{(Equation 1)} \quad K = 10^6 * (a*d)/(b*c*e)$$

Here, a: Si content of the plating bath (wt%), b: line speed (mpm), c: A/K gap (mm), d: A/K pressure (kPa), e: A/K height (mm), and the line speed refers to the speed of transfer through the plating bath, the gap of the air knife (A/K) for controlling the plating adhesion amount refers to a gap between the steel sheet and the air knife, and the A/K height refers to a distance from the plating bath to the A/K.

The (Equation 1) is obtained by considering the characteristics of each variable determining the characteristics of the plating layer in order to manufacture a plated steel sheet with a refined surface and has a technical meaning in that it considers the factors affecting the production of the plated steel sheet for the purpose of a refined surface and their correlations.

Considering various process factors, such as the plating bath Si content, plating bath temperature, dipping temperature, line speed, A/K gap, A/K pressure, A/K height, and cooling tower cooling rate to manufacture a plated steel sheet with a refined surface, it is necessary to optimize the plating bath Si content, line speed, A/K gap, A/K pressure, and A/K height, and this is derived from the (Equation 1). When the K value of the (Equation 1) is 200 to 400, a plated steel sheet with a refined surface may be obtained.

Specifically, if the K value is less than 200, the A/K pressure may not be high enough to reduce the spangle size or the line speed, A/K gap, and A/K height may be low, making it difficult to reduce the spangle size. If the K value exceeds 400, the A/K pressure may be too high or the line speed, A/K gap, and A/K height may be higher than appropriate values, making it difficult to reduce the spangle size due to cooling of the plated steel sheet.

The base steel sheet may be provided in various manners before being immersed in the plating bath. For example, the base steel sheet may be manufactured by including processes, such as hot rolling, coiling, cold rolling, and annealing, after heating a steel slab. Specific process conditions for heating, hot rolling, coiling, cold rolling, and annealing of the steel slab required here may vary depending on the characteristics required for the base steel sheet, and therefore are not particularly limited.

Mode for Invention

Hereinafter, examples of the present disclosure will be described. The following examples may be variously modified within the scope of the present disclosure by those skilled in the art. The following examples are intended to help understand the present disclosure, and the scope of the present disclosure should not be limited to the following examples, but should be determined by the claims described below as well as their equivalents.

(Example)

In the example of the present disclosure, a general 22MnB5 base steel sheet was prepared and immersed in a plating bath including about 7.5 to 11.5 wt% of Si and a remainder of Al and inevitable impurities to manufacture an aluminum-plated steel sheet. At this time, the temperature of the plating bath was 640 to 670°C, and a dipping temperature of the base steel sheet was 650 to 680°C.

In order to manufacture the plated steel sheet, the Si content in the plating bath, the steel sheet transfer speed (line speed), and the single-sided plating adhesion amount were controlled to 10 to 80 g/m$^2$. The plating adhesion amount was controlled by an air knife (A/K) and transferred to a cooling tower as a cooling unit so as to be cooled. The process conditions at this time are shown in Table 1.

[Table 1]

| CLASSIFICATION | Si CONTENT OF PLATING BATH (wt. %) | LINE SPEED (mpm) | AIR KNIFE(A/K) | | | COOLING RATE OF COOLIN TOWER (°C/s) G | EQUATION 1 |
|---|---|---|---|---|---|---|---|
| | | | A/K GAP (mm) | A/K PRESSURE(kPa) | A/K HEIGHT (mm) | | |
| COMPARATIVE EXAMPLE 1 | 7.5 | 120 | 15 | 11 | 900 | 15 | 51 |
| COMPARATIVE EXAMPLE 2 | 7.5 | 100 | 14 | 11 | 1000 | 13 | 59 |
| COMPARATIVE EXAMPLE 3 | 7.5 | 75 | 9 | 11 | 900 | 14 | 136 |
| COMPARATIVE FXAMPI F 4 | 7.5 | 75 | 11 | 13 | 800 | 14 | 148 |
| COMPARATIVE EXAMPLE 5 | 9.5 | 90 | 10 | 10 | 1000 | 15 | 106 |
| COMPARATIV EXAMPLE 6 | 9.5 | 90 | 9 | 11 | 900 | 16 | 143 |
| COMPARATIVE EXAMPLE 7 | 9.5 | 80 | 10 | 11 | 900 | 15 | 145 |
| COMPARATIVE EXAMPLE 8 | 9.5 | 75 | 12.5 | 10 | 1000 | 15 | 101 |
| COMPARATIVE EXAMPLE 9 | 9.5 | 120 | 15 | 12 | 1000 | 14 | 63 |
| COMPARATIVE EXAMPLE 10 | 9.5 | 120 | 15 | 11 | 900 | 15 | 65 |
| COMPARATIVE EXAMPLE 11 | 9.5 | 100 | 14 | 11 | 1000 | 13 | 75 |
| INVENTIVE EXAMPLE 1 | 9.5 | 75 | 7.5 | 11 | 900 | 14 | 206 |
| INVENTIVE EXAMPLE 2 | 9.5 | 75 | 10 | 13 | 800 | 14 | 206 |
| INVENTIVE EXAMPLE 3 | 9.5 | 65 | 8 | 13 | 800 | 15 | 297 |

(continued)

| CLASSIFICATION | Si CONTENT OF PLATING BATH (wt. %) | LINE SPEED (mpm) | AIR KNIFE(A/K) | | | COOLING RATE OF COOLIN TOWER (°C/s) G | EQUATION 1 |
| --- | --- | --- | --- | --- | --- | --- | --- |
| | | | A/K GAP (mm) | A/K PRESSURE(kPa) | A/K HEIGHT (mm) | | |
| INVENTIVE EX-AMPLE 4 | 9.5 | 60 | 9 | 13 | 800 | 15 | 286 |
| INVENTIVE EXAMPLE 5 | 9.5 | 60 | 7.5 | 12 | 700 | 14 | 362 |
| COMPARATIVE EXAMPLE 12 | 9.5 | 55 | 7.5 | 12 | 600 | 15 | 461 |
| COMPARATIVE EXAMPLE 13 | 11.5 | 60 | 5.5 | 13 | 900 | 16 | 503 |
| COMPARATIVE EXAMPLE 14 | 11.5 | 70 | 7.5 | 15 | 800 | 14 | 411 |
| COMPARATIVE EXAMPLE 15 | 11.5 | 65 | 5 | 12 | 1000 | 13 | 425 |
| COMPARATIVE EXAMPLE 16 | 11.5 | 50 | 7.5 | 11 | 800 | 15 | 422 |
| COMPARA I IVE EXAMPLE 17 | 11.5 | 60 | 5 | 12 | 1000 | 14 | 460 |

The Equation 1 may be calculated as follows.

$$\text{(Equation 1)} \quad K = 10^6 * (a*d)/(b*c*e)$$

Here, a: plating bath Si content (wt%), b: line speed (mpm), c: A/K gap (mm), d: A/K pressure (kPa), e: A/K height (mm)

For the specimens manufactured as above, the spangle size was checked after surface etching, and the whiteness, glossiness, and surface refinement of each specimen were checked, and the results are shown in Table 2 below.

The whiteness and glossiness are average values of values measured three times each on the front and rear surfaces after cutting each specimen to 150 x 150 mm. The whiteness is a value compared to L value of the measured value, and the glossiness is a value compared to a value of 60 degrees. The whiteness is expressed as a fraction (%), with complete white being 100, and the glossiness uses gloss unit (GU).

The surface etching was performed using 4 g NaCl + 200 mL (40% $H_3PO_4$) as a solution for 1 to 3 minutes.

The spangle size was measured by taking a photo of a 50 x 50 mm plated steel sheet and analyzing the photo. The shape of the spangle observed after etching was a rhombus shape with two triangles attached. At this time, the length of the major axis of the rhombus was defined as the size of one spangle, and an average value of lengths of the major axes of 25 such rhombuses was defined as the spangle size during image analysis. In particular, for the convenience of measurement and clarification of the standard, the average of 25 major axes of large rhombuses, not small rhombuses, was measured and expressed as the spangle size.

Meanwhile, in Table 2 below, a case in which the size of the spangle was very small and difficult to check with the naked eye was indicated as not detected.

Meanwhile, as for the determination of surface refinement, a surface shape of the aluminum-plated steel sheet was expressed as normal, a case in which the spangles were too large and the shape protrudes was expressed as inferior, and a case in which the surface was more refined than the surface of the general aluminum-plated steel sheet was expressed as excellent.

[Table 2]

| CLASSIFICATION | WHITENESS (%) | GLOSSINESS (GU) | SIZE OF SPANGLE (mm) | SURFACE REFINEMENT |
|---|---|---|---|---|
| COMPARATIVE EXAMPLE 1 | 75 | 43 | 5.6 | INFERIOR |
| COMPARATIVE EXAMPLE 2 | 73 | 56 | 6.3 | INFERIOR |
| COMPARATIVE EXAMPLE 3 | 82 | 48 | 3.9 | NORMAL |
| COMPARATIVE EXAMPLE 4 | 80 | 55 | 4.1 | NORMAL |
| COMPARATIVE EXAMPLE 5 | 70 | 41 | 7.3 | INFERIOR |
| COMPARATIVE EXAMPLE 6 | 80 | 42 | 3.7 | NORMAL |
| COMPARATIVE EXAMPLE 7 | 81 | 58 | 4.2 | NORMAL |
| COMPARATIVE EXAMPLE 8 | 76 | 54 | 5.4 | INFERIOR |
| COMPARATIVE | 74 | 49 | 6.1 | INFERIOR |
| COMPARATIVE EXAMPLE 10 | 70 | 51 | 6.6 | INFERIOR |
| COMPARATIVE EXAMPLE 11 | 70 | 48 | 7.3 | INFERIOR |
| INVENTIVE EXAMPLE 1 | 95 | 80 | NOT DETECTED | EXCELLENT |
| INVENTIVE EXAMPLE 2 | 94 | 77 | NOT DETECTED | EXCELLENT |
| INVENTIVE EXAMPLE 3 | 85 | 61 | 1.8 | EXCELLENT |
| INVENTIVE EXAMPLE 4 | 90 | 68 | 1.2 | EXCELLENT |
| INVENTIVE EXAMPLE 5 | 94 | 75 | NOT DETECTED | EXCELLENT |
| COMPARATIVE EXAMPLE 12 | 81 | 48 | 3.2 | NORMAL |
| COMPARATIVE EXAMPLE 13 | 71 | 41 | 6.4 | INFERIOR |
| COMPARATIVE EXAMPLE 14 | 80 | 51 | 4.2 | NORMAL |
| COMPARATIVE EXAMPLE 15 | 73 | 57 | 7.5 | INFERIOR |
| COMPARATIVE EXAMPLE 16 | 75 | 54 | 6.8 | INFERIOR |
| COMPARATIVE EXAMPLE 17 | 77 | 46 | 5.9 | INFERIOR |

As can be seen from the results of Tables 1 and 2 and FIGS.1 to 4 above, the aluminum-plated steel sheets corresponding to Inventive Examples satisfying the range presented in the present disclosure have no spangles observed on the surface after etching or has a size of 2.5 mm or less, and at this time, the aluminum-plated steel sheets corresponding to Inventive Examples have a whiteness of 85% or more and a glossiness of 60 GU or more, so that excellent surface characteristics may be secured.

FIGS.1 (a) and (b) are photographs of the surface of Comparative Example 8 before and after etching, and FIG. 2 is a result of EPMA analysis for Comparative Example 8.

FIG. 1 (a) is a photo image of Comparative Example 8, and it can be seen that a pattern is formed on the surface of the plated steel sheet. In order to confirm this further, FIG. 1 (b) shows a photo image of an AlSi plated steel sheet whose surface has been etched.

The spangle pattern of the AlSi plated steel sheet is a phenomenon occurring when Si is separately precipitated during cooling of the plated steel sheet. FIG. 2 shows the result of observing the surface of the plated steel sheet of Comparative Example 8 using an EPMA, and it can be seen that the spangle pattern is Si in a needle-like structure.

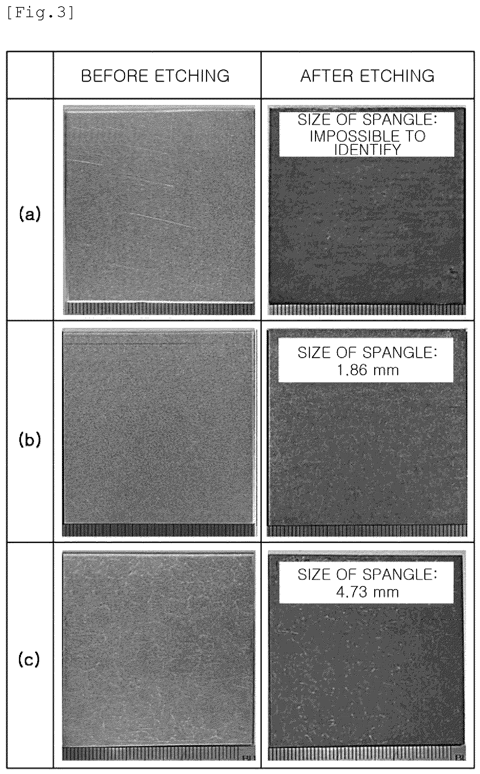

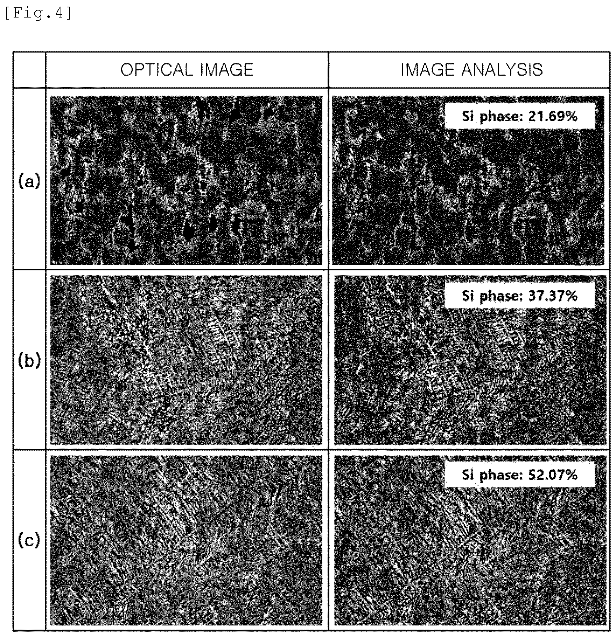

FIG. 3 (a) to (c) are photographs of the surfaces of Inventive Examples 1 and 3 and Comparative Example 8 before and after etching, respectively. FIG. 4 (a) to (c) are optical images and image analysis results of Inventive Examples 1 and 3 and Comparative Example 8, respectively. Referring to the results of FIGS. 3 and 4, in the Inventive Examples, the fraction of the surface Si phase was reduced to 40 area% or less, and as described above, it may be expected that this will have an additional effect on improving corrosion resistance in the future as the size of the Si phase is reduced.

**Claims**

1. An aluminum-based plated steel sheet comprising:

   a base steel sheet and an Al plating layer formed on the base steel sheet,
   wherein a size of spangles on a surface of the Al plating layer is 2.5 mm or less after surface etching.

2. The aluminum-based plated steel sheet of claim 1, wherein after surface etching of the plated steel sheet, a fraction of Si phase observed in an optical image is 40 area% or less.

3. The aluminum-based plated steel sheet of claim 1, wherein a whiteness of the aluminum-based plated steel sheet is 85% or more.

4. The aluminum-based plated steel sheet of claim 1, wherein a glossiness of the aluminum-based plated steel sheet is 60 GU or more.

5. The aluminum-based plated steel sheet of claim 1, wherein the base steel sheet comprises, in wt%, C: 0.02 to 0.6%, Si: 0.001 to 2% , Al: 0.001 to 1%, Mn: 0.1 to 4% , P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a remainder of Fe and impurities.

[Fig.1]

(a)                                    (b)

[Fig.2]

[Fig.3]

| | BEFORE ETCHING | AFTER ETCHING |
|---|---|---|
| (a) | | SIZE OF SPANGLE: IMPOSSIBLE TO IDENTIFY |
| (b) | | SIZE OF SPANGLE: 1.86 mm |
| (c) | | SIZE OF SPANGLE: 4.73 mm |

[Fig.4]

| | OPTICAL IMAGE | IMAGE ANALYSIS |
|---|---|---|
| (a) | | Si phase: 21.69% |
| (b) | | Si phase: 37.37% |
| (c) | | Si phase: 52.07% |

## INTERNATIONAL SEARCH REPORT

| International application No. |
|---|
| **PCT/KR2023/021229** |

### A. CLASSIFICATION OF SUBJECT MATTER

**C23C 2/12**(2006.01)i; **C23C 2/20**(2006.01)i; **C23C 2/28**(2006.01)i; **C22C 21/02**(2006.01)i; **C22C 38/58**(2006.01)i; **C22C 38/34**(2006.01)i; **C22C 38/50**(2006.01)i; **C22C 38/46**(2006.01)i; **C22C 38/52**(2006.01)i

According to International Patent Classification (IPC) or to both national classification and IPC

### B. FIELDS SEARCHED

Minimum documentation searched (classification system followed by classification symbols)

C23C 2/12(2006.01); C21D 1/26(2006.01); C23C 2/00(2006.01); C23C 2/16(2006.01); C23C 2/40(2006.01); C25D 3/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스팽글(spangle), 알루미늄-실리콘도금(Al-Si coating), 소지강판(base steel sheet), 백색(white), 에칭(etching)

### C. DOCUMENTS CONSIDERED TO BE RELEVANT

| Category* | Citation of document, with indication, where appropriate, of the relevant passages | Relevant to claim No. |
|---|---|---|
| Y | KR 10-2015-0049991 A (POSCO COATED&COLOR STEEL CO., LTD.) 08 May 2015 (2015-05-08)<br>See paragraphs [0010], [0017]-[0021], [0025]-[0028] and [0031]-[0035] and table 1. | 1-5 |
| Y | WO 2022-131848 A1 (POSCO) 23 June 2022 (2022-06-23)<br>See paragraphs [0031] and [0079]-[0080]. | 1-5 |
| A | KR 10-2021-0112323 A (SALZGITTER FLACHSTAHL GMBH) 14 September 2021 (2021-09-14)<br>See paragraphs [0047]-[0051] and figure 1. | 1-5 |
| A | KR 10-2010-0113346 A (DONGBU STEEL CO., LTD.) 21 October 2010 (2010-10-21)<br>See claims 1-7 and figures 1-3. | 1-5 |
| A | JP 2001-158953 A (NKK CORP.) 12 June 2001 (2001-06-12)<br>See paragraphs [0006]-[0012] and table 2. | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **03 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021229**

| Patent document cited in search report | | | Publication date (day/month/year) | Patent family member(s) | | | Publication date (day/month/year) |
|---|---|---|---|---|---|---|---|
| KR | 10-2015-0049991 | A | 08 May 2015 | None | | | |
| WO | 2022-131848 | A1 | 23 June 2022 | CN | 117136252 | A | 28 November 2023 |
| | | | | EP | 4265815 | A1 | 25 October 2023 |
| | | | | JP | 2024-500439 | A | 09 January 2024 |
| | | | | KR | 10-2023-0024333 | A | 20 February 2023 |
| | | | | US | 2024-0051005 | A1 | 15 February 2024 |
| KR | 10-2021-0112323 | A | 14 September 2021 | DE | 102019100140 | A1 | 09 July 2020 |
| | | | | EP | 3906328 | A1 | 10 November 2021 |
| | | | | EP | 3906328 | B1 | 06 March 2024 |
| | | | | US | 11795535 | B2 | 24 October 2023 |
| | | | | US | 2022-0090250 | A1 | 24 March 2022 |
| | | | | WO | 2020-141147 | A1 | 09 July 2020 |
| KR | 10-2010-0113346 | A | 21 October 2010 | KR | 10-1083750 | B1 | 16 November 2011 |
| JP | 2001-158953 | A | 12 June 2001 | None | | | |

Form PCT/ISA/210 (patent family annex) (July 2022)

**EP 4 640 915 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6296805 B